# EUROPEAN PATENT APPLICATION

(11) **EP 2 988 205 A1**
(43) Date of publication of application: **24.02.2016**
(21) Application number: 15181666.7
(22) Date of filing: 20.08.2015
(51) Int. Cl.: G06F 3/14, G06F 17/30

(54) **METHOD AND DEVICE FOR TRANSMITTING IMAGE**

(30) Priority: 22.08.2014 CN 201410419285
(71) Applicant: Xiaomi Inc., Beijing 100085 (CN)
(72) Inventor: CAI, Jingwei, 100085 BEIJING (CN); LIU, Zhukun, 100085 BEIJING (CN); QIAN, Cheng, 100085 BEIJING (CN)
(74) Representative: Delumeau, François Guy

(57) **Abstract**

The present disclosure relates to a method and a device for transmitting an image, which improve a display effect of the image. The method includes: receiving a first image (S101) having a first resolution from a mobile terminal; sending (S102) a request to obtain a second image to a server according to an identification of the first image; and receiving the second image (S103) having a second resolution from the server, in which the second resolution is larger than the first resolution.

## Description

### TECHNICAL FIELD

The present disclosure generally relates to the communication and computer processing fields, and more particularly, to a method and a device for transmitting an image.

### BACKGROUND

With the development of the electronic technology, taking photos and viewing online images have been common services. The user may view online images and download the interested ones to his local disk. The user also may share the excellent photos taken by himself with his friends. Moreover, most electronic products have a web-surfing capability or may be communicated with other electronic products. For example, the user may project an image in the mobile phone onto the television to view the image thereon.

Inventors of the present disclosure have found that, in the related art, the screen of the mobile phone is much smaller than that of the television, i.e., the resolution of the mobile phone is significantly less than that of the television. When the user projects the image in the mobile phone onto the television, the image displayed on the television is not clear due to the resolution of the image.

### SUMMARY

The present disclosure provides a method and a device for transmitting an image.

According to a first aspect, the invention relates to a method for transmitting an image, comprising: receiving a first image having a first resolution from a mobile terminal; sending to a server a request to obtain a second image having a second resolution according to an identification of the first image, and receiving the second image from the server, wherein the second resolution is larger than the first resolution.

The technical solution provided by embodiments of the present disclosure has the following advantageous effects. In embodiments of the present disclosure, a device obtains a first image having a low resolution from a mobile terminal, and then requests obtaining a second image having a high resolution from a server so as to obtain a second image of high quality, which is suitable to be displayed on the device, thus improving a display effect.

In a particular embodiment, the method further comprises logging in the server with a predetermined account before sending to the server a request to obtain the second image, wherein receiving the second image having a second resolution from the server comprises receiving the second image from an image database corresponding to the predetermined account from the server.

The technical solution provided by embodiments of the present disclosure has following advantageous effects. By logging in the server with the predetermined account, an identity of a visitor of the first image may be controlled, and a search range of the second image may be reduced, thus improving searching efficiency.

In a particular embodiment, the server is storing a plurality of images having different resolutions but having same content, the request comprises a resolution of a device, and the second image is selected from the plurality of images, such as minimizing the difference between the resolution of the device and the resolution of the plurality of images. In other words, the difference between the second resolution and the resolution of the device is a minimum one of differences between each resolution of plurality of the image and the resolution of the device; or

the request comprises a type of the device and/or a model of the device, the server determines the resolution of the device according to the type of the device and/or the model of the device, and the second image is selected from the plurality of images, such as minimizing the difference between the resolution of the device and the resolution of the plurality of images. In other words, the difference between the second resolution and the resolution of the device is the minimum one of differences between each resolution of the plurality of images and the resolution of the device.

The technical solution provided by embodiments of the present disclosure has following advantageous effects. The image of the resolution closest to the resolution of the device is selected. If the resolution is low, the display effect is unsatisfactory; if the resolution is high, many transmitting resources may be occupied. Therefore, by selecting as the second image the image of the resolution closest to the resolution of the device, the quality of the obtained image is improved and an appropriate amount of transmitting resource is occupied.

In a particular embodiment, when there are two images of the plurality minimizing the difference between the resolution of the device and the resolution of images of the plurality, the second image is further selected between the two images as the one having the larger resolution. In other words, when there are two minimum ones of the differences between each resolution of the plurality of images and the resolution of the device, the second resolution is larger than the resolution of the device.

The technical solution provided by embodiments of the present disclosure has following advantageous effects. When there are two minimum ones of the differences between each resolution of the plurality of images and the resolution of the device, the image of the resolution larger than the resolution of the device is selected, and thus the quality of the image is given priority to, which contributes to improving the display effect.

In a particular embodiment, each image of the plurality of images in the server is uploaded by the mobile terminal.

The technical solution provided by embodiments of the present disclosure has following advantageous effects. The mobile terminal may upload a plurality of images having same content but having different resolutions, and thus it is convenient for different display devices with different resolutions to download and display the image.

In a particular embodiment, the method further comprises: displaying the first image having the first resolution; replacing the first image having the first resolution with the second image having the second resolution after receiving the second image having the second resolution.

The technical solution provided by embodiments of the present disclosure has following advantageous effects. The first image having the low resolution is displayed firstly, and after the second image having the high resolution is downloaded, the second image having the high resolution is displayed. Therefore, the user may view the image as soon as possible, and thus a waiting time is reduced. Moreover, the user also may view the image having the high quality in a short time, thus improving a viewing effect.

In a particular embodiment, the step of replacing the first image having the first resolution with the second image having the second resolution comprises replacing the first image having the first resolution with the second image having the second resolution in a refreshing manner.

The technical solution provided by embodiments of the present disclosure has following advantageous effects. The display content is replaced in the refreshing manner, and thus a smooth transition from the first image having the low quality to the second image having the high quality is realized and an effect of the replacing of the display content on the user is reduced.

In one particular embodiment, the steps of the method for transmitting an image are determined by computer program instructions.

Consequently, according to a second aspect, the invention is also directed to a computer program for executing the steps of a method for transmitting an image as described above when this program is executed by a computer or a processor of a terminal device.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a third aspect, the invention relates to a device for transmitting an image, including:
a first receiving module, configured to receive a first image having a first resolution from a mobile terminal;
a sending module, configured to send a request to a server to obtain a second image having a second resolution according to an identification of the first image; and
a second receiving module, configured to receive the second image having a second resolution from the server, wherein the second resolution is larger than the first resolution.

In a particular embodiment, the device further comprises:
a log-in module, configured to log in the server with a predetermined account,
in which the second receiving module is configured to receive the second image having the second resolution from an image database corresponding to the predetermined account from the server.

In a particular embodiment, the request comprises a resolution of a device allowing the server to select the second image from a plurality of images such as minimizing the difference between the resolution of the device and the resolution of the plurality of images, the plurality of images being stored by said server. In other words, the request comprises a resolution of a device, and a difference between the second resolution and the resolution of the device is a minimum one of differences between each resolution of the plurality of images and the resolution of the device; or

the request comprises a type of the device and/or a model of the device allowing the server to determine the resolution of the device according to the type of the device and/or the model of the device and to select the second image from a plurality of images such as minimizing the difference between the resolution of the device and the resolution of the plurality of images, the plurality of images being stored by the server. In other words, the request comprises a type of the device and/or a model of the device, the server determines the resolution of the device according to the type of the device and/or the model of the device, and the difference between the second resolution and the resolution of the device is the minimum one of differences between each resolution of the plurality of images and the resolution of the device.

In a particular embodiment, the device further comprises:
a first displaying module, configured to display the first image having the first resolution;
a second displaying module, configured to replace the first image having the first resolution with the second image having the second resolution after receiving the second image having the second resolution.

In a particular embodiment, the second displaying module is configured to replace the first image having the first resolution with the second image having the second resolution in a refreshing manner.

According to a fourth aspect, the invention relates to a device for transmitting an image, including:
a processor;
a memory configured to store an instruction executable by the processor;
in which the processor is configured to
receive a first image having a first resolution from a mobile terminal;
send a request to obtain a second image from a server according to an identification of the first image; and
receive the second image having a second resolution from the server, wherein the second resolution is larger than the first resolution.

It is to be understood that both the foregoing general description and the following detailed description are exemplary and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1A is a schematic diagram of a display interface according to an exemplary embodiment;
Fig. 1B is a flow chart of a method for transmitting an image according to an exemplary embodiment;
Fig. 2 is a flow chart of a method for transmitting an image according to an exemplary embodiment;
Fig. 3 is a flow chart of a method for transmitting an image according to an exemplary embodiment;
Fig. 4 is a block diagram of a device for transmitting an image according to an exemplary embodiment;
Fig. 5 is a block diagram of a device for transmitting an image according to an exemplary embodiment;
Fig. 6 is a block diagram of a device for transmitting an image according to an exemplary embodiment;
Fig. 7 is a block diagram of a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

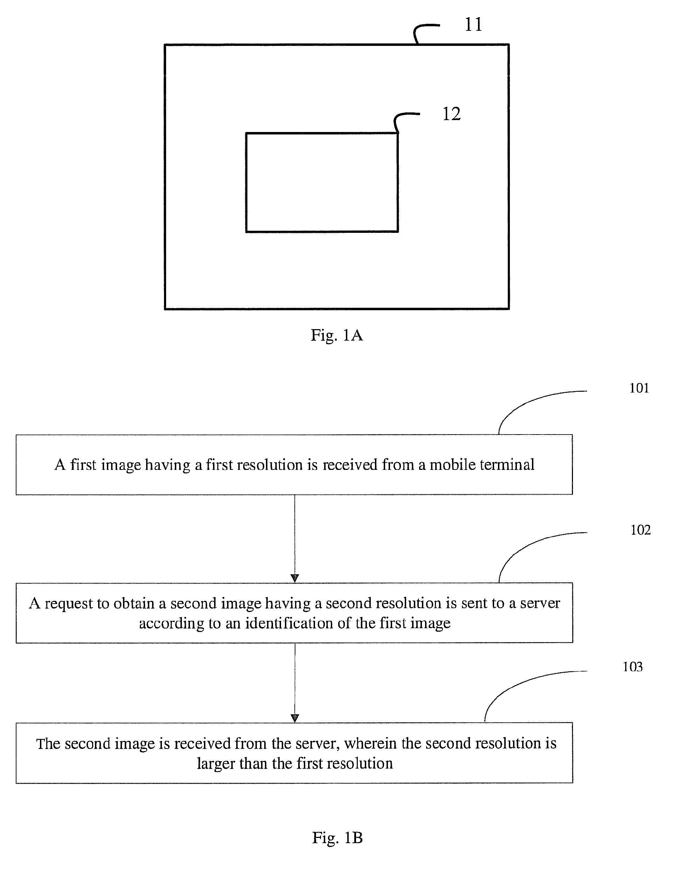

In the related art, a display screen of a television is larger than that of a mobile phone. In order to obtain a better display effect and to view images with his friends, a user may transmit an image in the mobile phone to the television to display the image thereon. However, a resolution of the image in the mobile phone is less than that of the display interface of the television, and the display effect of the image in the television is illustrated in Fig. 1A, in which a display interface of the television is indicated as 11 and the image is indicated as 12. It is clear that a large blank area exists in the display interface of the television without obtaining an intended display effect. If the image is enlarged to fill the entire display interface, the image will be indistinct, thus resulting in a poor display effect. In order to solve the problem, in embodiments, after receiving the image having a low resolution from the mobile phone, the television may obtain another image having the same content and having a high resolution from a server so as to satisfy a display requirement of the television, thus improving the display effect.

Fig. 1B is a flow chart of a method for transmitting an image according to an exemplary embodiment. As shown in Fig. 1B, the method may be implemented in a display device with a large screen and includes the following steps.

At step S101, a first image having a first resolution is received from a mobile terminal.

At step S102, a request to obtain a second image is sent to a server according to an identification of the first image.

At step S103, the second image having a second resolution is received from the server, in which the second resolution is larger than the first resolution.

This embodiment is suitable for a device having a display screen with a resolution larger than that of the mobile phone. When receiving the first image from the mobile terminal, the device sends the request to the server to obtain the second image displaying the same content and having a high resolution, which contributes to improving a display effect and making the best of the performance of the device.

For example, the mobile terminal has a resolution of 1024x768, and the resolution of the first image stored in the mobile terminal is also 1024x768, i.e., the first image is named as a 1K (which indicates the resolution thereof) image. The television has a resolution of 4096x2160. The mobile terminal sends the 1K image to the television. After receiving the 1K image, the television sends a request to the server to obtain a 4K image (a corresponding resolution thereof is 4096x2160). After receiving the 4K image, the television displays the 4K image locally. Thus, the second image having a high resolution is obtained and the display effect is improved.

In another embodiment, the identification of the first image, such as 100ZP1001, may be an identification automatically generated when the mobile terminal or a camera takes a photo, therefore mobile terminals of a same model may generate the same identification. Since different images may have the same identification, the second image from the server may be different (i.e. have a different content) with that from the mobile terminal, and also images of other users may be obtained without permission of the other users, thus resulting in a bad effect on security of the other users' images. In order to solve this problem, in a particular embodiment, the method further includes a step A, in which the user is logged in the server with a predetermined account. Therefore, at step S103, the second image having a second resolution from an image database corresponding to the predetermined account is received from the server.

The user may log in the server through the mobile terminal with the predetermined account, upload the second image having the second resolution and store the second image having the second resolution in the server. A same application may be logged in with the same predetermined account in the mobile terminal and the television respectively, and the mobile terminal and the television communicate with each other through the application. The mobile terminal sends the first image having the first resolution to the television through the application. Since the application is logged in with the predetermined account in the television, i.e., the television is communicating with the server via the predetermined account, when the television sends the request to obtain the second image to the server, information of the account also is carried and sent to the server. After receiving the request, the server searches for the second image requested by the television in the image database corresponding to the predetermined account, for example, the server searches for a 4K image 100ZP1001. Then, the server sends the found image to the television.

In another embodiment, in order to improve the security, the method further includes a step B, in which information for security authentication is sent to the server. Therefore, at step S103, after a successful authentication, the second image having the second resolution is received from the server.

The television may either send the information for security authentication solely or carry the information for security authentication in the request. The server authenticates the information for security authentication. If the authentication is successful, the server searches for the second image requested by the television and feeds the second image back to the television; if not, the server sends a refusing response to the television. The information for security authentication may be a password or a verification code.

In another embodiment, the server may store a plurality of images having different resolutions but having the same content. If the television may request to obtain the second image having a resolution corresponding to the resolution of the television, the image of high quality is obtained to improve the display effect and an appropriate amount of transmitting resource is occupied. In order to solve the problem, the request includes a resolution of a device, and a difference between the second resolution and the resolution of the device is a minimum one of differences between each resolution of the image of the plurality having the same content and the resolution of the device.

In another embodiment, the request includes a type of the device and/or a model of the device, instead of carrying the resolution of the device directly. The server determines the resolution of the device according to the type of the device and/or the model of the device. Then, the server searches for the image matching with the resolution of the device, i.e., the difference between the second resolution and the resolution of the device is the minimum one of differences between each resolution of the image of the plurality having the same content and the resolution of the device. The type of the device may be an XX's television, an XX's tablet PC and an XX's displayer. If a certain brand only produces a type of television, the resolution of the television may be determined. The model of the device may include the brand and the type of the device, such as an XX's 47-inch ultrathin smart television.

For example, the resolution of the mobile terminal is 1024x768, and the resolution of the first image 100ZP1001 stored in the mobile terminal also is 1024x768, i.e., the first image is named as a 1K (which indicates the resolution thereof) image. The resolution of the television is 3008×1620. The mobile terminal sends the 1K image to the television. After receiving the 1K image, the television sends the request to obtain the second image 100ZP1001 to the server, in which the request carries the resolution 3008x1620 of the television and the identification 100ZP1001 of the first image. The server stores a plurality of images 100ZP1001 having different resolutions such as 1024x768, 1920×1080, 3008x1620 and 4096x2160. The server compares the resolution 3008×1620 of the device with each resolution of the images 100ZP1001 of the plurality and determines that the difference between the resolution 3008x1620 of the image 100ZP1001 and the resolution of the device is minimum, i.e., the difference is zero. Then, the server sends the image 100ZP1001 having the resolution 3008×1620 to the television. The difference is an absolute value of a difference between two resolutions.

In another embodiment, if the server does not store the image 100ZP1001 having the resolution 3008x1620, differences between the resolution 1920×1080 and the resolution 3008x1620 of the device and between the resolution 4096x2160 and the resolution 3008x1620 of the device are two minimum ones of the differences between each resolution of the image of the plurality and the resolution of the device. Then, which one of the images of above two resolutions shall be sent to the television by the server? In order to solve the problem, in the embodiment, when there are two minimum ones of the differences between each resolution of the image of the plurality and the resolution of the device, the second resolution is larger than the resolution of the device. In other words, the resolution larger than 3008x1620 is selected from the resolutions 1920×1080 and 4096x2160, i.e., the resolution 4096x2160 is selected.

In this embodiment, the quality of the image is considered prior to the network resource occupation, and thus the image of high quality may be obtained. After receiving the image having the resolution 4096x2160, the television reduces the image having the resolution 4096x2160 to an image having the resolution 3008x1620 to display the image.

In another embodiment, in order to display the image quickly and obtain a good user experience, the method further includes step C1 and step C2.

At step C1, the first image having the first resolution is displayed.

At step C2, the first image having the first resolution is replaced with the second image having the second resolution after the second image having the second resolution is received.

When receiving the first image having the first resolution, the television displays the first image having the first resolution immediately, thus reducing a time interval from transmitting the image to viewing the image. After receiving the second image having the second resolution, the television displays the second image having the second resolution and hides or cancels the first image having the first resolution. Therefore, the user may view the image as early as possible and may view the image of high quality after receiving the second image having the second resolution.

In another embodiment, at step C2, the first image having the first resolution is replaced with the second image having the second resolution in a refreshing manner.

For example, when receiving the first image having the first resolution from the mobile terminal, the television stores the first image having the first resolution in a first buffer. When displaying the first image having the first resolution, the television obtains the first image having the first resolution from the first buffer and refreshes the screen with the first image having the first resolution. When receiving the second image having the second resolution, the television stores the second image having the second resolution in a second buffer. The television obtains the second image having the second resolution from the second buffer and refreshes the screen with the second image having the second resolution. Thus, the first image having the first resolution is replaced with the second image having the second resolution. Moreover, it is quick to refresh the screen, which may not be identified by eyes, thus realizing a smooth transition from the first image having the first resolution to the second image having the second resolution and reducing the influence on a viewing effect of the user.

The process of transmitting the image will be described in detail with reference to several embodiments.

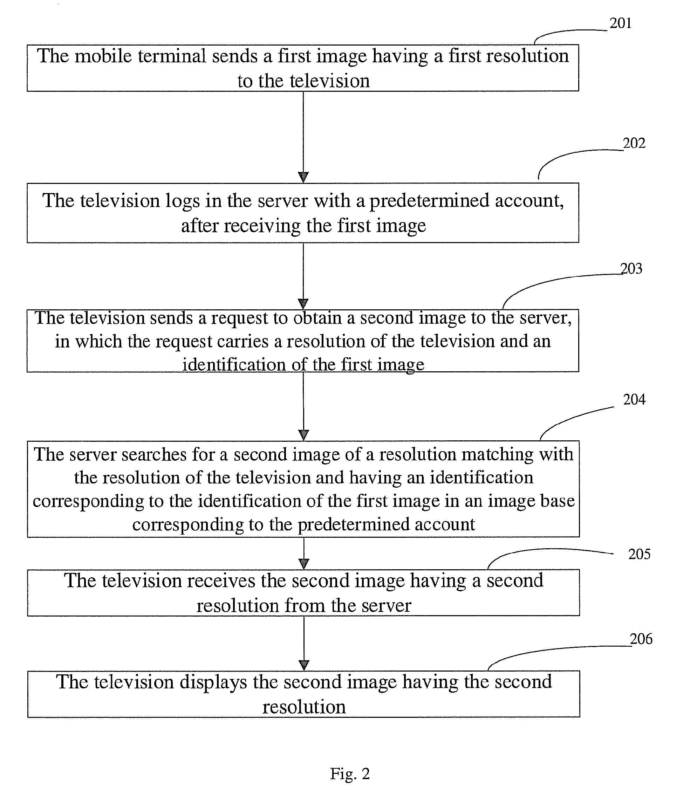

Fig. 2 is a flow chart of a method for transmitting an image according to an exemplary embodiment. As shown in Fig. 2, the method may be implemented by a mobile terminal, a display device (such as a television) with a large screen and a server and include the following steps.

At step 201, the mobile terminal sends a first image having a first resolution to the television.

At step 202, the television logs in the server with a predetermined account after receiving the first image having the first resolution.

At step 203, the television sends a request to the server to obtain a second image, in which the request carries a resolution of the television and an identification of the first image.

At step 204, the server searches for a second image of a resolution matching with the resolution of the television and having an identification corresponding to the identification of the first image in an image database corresponding to the predetermined account.

At step 205, the television receives the second image having a second resolution from the server.

At step 206, the television displays the second image having the second resolution.

In the embodiment, the television logs in the server with the predetermined account. The server searches for the second image requested by the television in the image database corresponding to the predetermined account, and the second image to be searched for has the resolution matched with that of the television. Thus, the television may obtain the second image of high quality, the display effect may be improved and the transmitting resources may be used effectively.

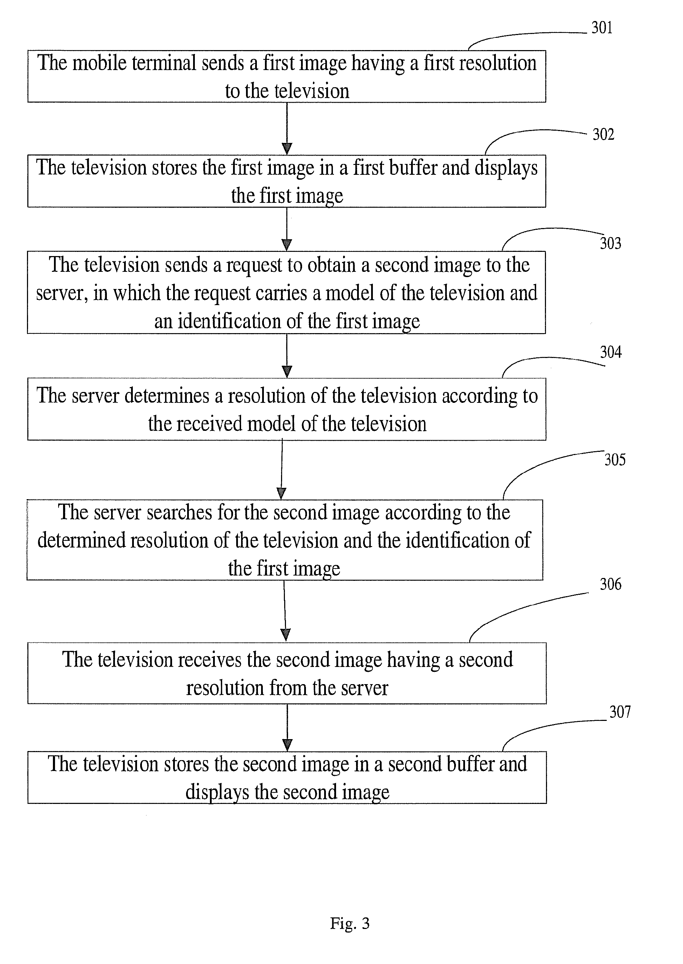

Fig. 3 is a flow chart of a method for transmitting an image according to an exemplary embodiment. As shown in Fig. 3, the method may be implemented by a mobile terminal, a display device (such as a television) with a large screen and a server and include following steps.

At step 301, the mobile terminal sends a first image having a first resolution to the television.

At step 302, the television stores the first image having the first resolution in a first buffer and displays the first image having the first resolution.

At step 303, the television sends a request to the server to obtain the second image, in which the request carries a model of the television and an identification of the first image.

At step 304, the server determines a resolution of the television according to the received model of the television.

At step 305, the server searches for the second image according to the determined resolution of the television and the identification of the first image.

At step 306, the television receives the second image having the second resolution from the server.

At step 307, the television stores the second image having the second resolution in a second buffer and displays the second image having the second resolution.

In this embodiment, the television refreshes the screen with the image in the second buffer, and thus the second image having the second resolution may be displayed. Moreover, when the first image having the first resolution is replaced with the second image having the second resolution, it is difficult for the user to perceive, i.e., it is possible to realize a smooth transition from the first image having the first resolution to the second image having the second resolution, thus resulting in a better display effect and a better user experience.

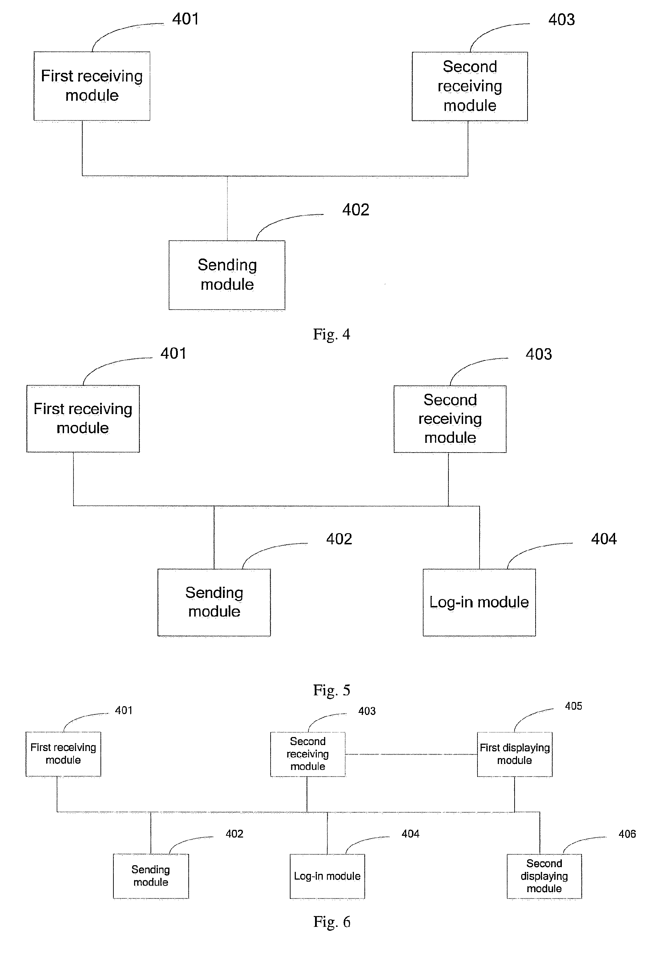

Fig. 4 is a block diagram of a device for transmitting an image according to an exemplary embodiment. With reference to Fig. 4, the device includes a first receiving module 401, a sending module 402 and a second receiving module 403. The device may be a device with a display screen larger than that of a mobile phone, such as a television, a desk computer, a notebook computer and a tablet personal computer.

The first receiving module 401 is configured to receive a first image having a first resolution from a mobile terminal.

The sending module 402 is configured to send a request to a server to obtain a second image from the server according to an identification of the first image.

The second receiving module 403 is configured to receive the second image having a second resolution from the server, in which the second resolution is larger than the first resolution.

In an embodiment, as shown in Fig. 5, the device further includes a log-in module 404.

The log-in module 404 is configured to log in the server with a predetermined account.

The second receiving module 403 is configured to receive the second image having the second resolution from an image database corresponding to the predetermined account from the server.

In another embodiment, the request includes a resolution of the device allowing the server to select the second image from a plurality of images such as minimizing the difference between the resolution of the device and the resolution of the plurality of images, the plurality of images being stored by the server. In other words, the difference between the second resolution and the resolution of the device is a minimum one of differences between each resolution of the plurality of images and the resolution of the device; or
the request includes a type of the device and/or a model of the device allowing the server to determine the resolution of the device according to the type of the device and/or the model of the device and to select the second image from a plurality of images such as minimizing the difference between the resolution of the device and the resolution of the plurality of images, the plurality of images being stored by said server. In other words the difference between the second resolution and the resolution of the device is the minimum one of differences between each resolution of the plurality of images and the resolution of the device.

In another embodiment, as shown in Fig. 6, the device further includes a first displaying module 405 and a second displaying module 406.

The first displaying module 405 is configured to display the first image having the first resolution.

The second displaying module 406 is configured to replace the first image having the first resolution with the second image having the second resolution after receiving the second image having the second resolution.

In another embodiment, the second displaying module 406 is configured to replace the first image having the first resolution with the second image having the second resolution in a refreshing manner.

With respect to the devices in the above embodiments, the specific manners for performing operations for individual modules therein have been described in detail in the embodiments regarding the methods for transmitting images, which will not be elaborated herein.

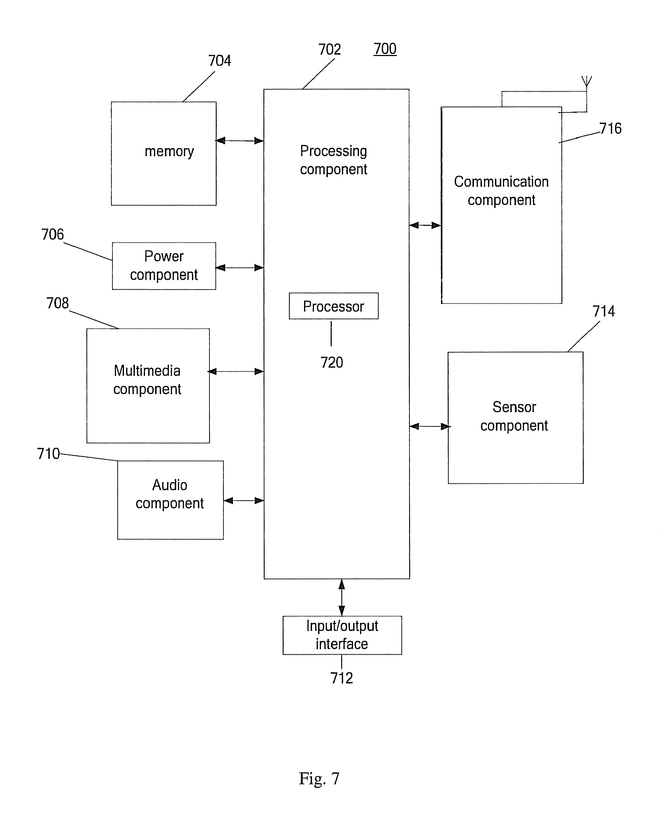

Fig. 7 is a block diagram of a device 700 for transmitting an image, according to an exemplary embodiment. For example, the device 700 may be a mobile phone, a television, a computer, a digital broadcast terminal, a messaging device, a gaming console, a tablet, a medical device, exercise equipment, a personal digital assistant, and the like.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700 such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 may access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 704, executable by the processor 720 in the device 700, for performing the above-described methods. For example, the non-transitory computer-readable storage medium may be a ROM, a RAM, a CD-ROM, a magnetic tape, a floppy disc, an optical data storage device, and the like.

In exemplary embodiments, there is provided a device for transmitting an image, including:
a processor;
a memory configured to store an instruction executable by the processor;
in which the processor is configured to
receive a first image having a first resolution from a mobile terminal;
send a request to a server to obtain a second image according to an identification of the first image; and
receive the second image having a second resolution from the server, wherein the second resolution is larger than the first resolution.

The processor is further configured to log in the server with a predetermined account before sending a request to a server to obtain the second image according to an identification of the first image. Receiving the second image having a second resolution from the server includes: receiving the second image having the second resolution from an image database corresponding to the predetermined account from the server.

The processor is further configured in a following manner:
the request comprises a resolution of a device allowing the server to select the second image from a plurality of images such as minimizing the difference between the resolution of the device and the resolution of the plurality of images, the plurality of images being stored by the server. In other words the difference between the second resolution and the resolution of the device is a minimum one of differences between each resolution of the plurality of images and the resolution of the device; or
the request comprises a type of the device and/or a model of the device allowing the server to determine the resolution of the device according to the type of the device and/or the model of the device and to select the second image from a plurality of images such as minimizing the difference between the resolution of the device and the resolution of the plurality of images, the plurality of images being stored by the server. In other words, the difference between the second resolution and the resolution of the device is the minimum one of differences between each resolution of the plurality of images and the resolution of the device.

The processor is further configured to:
display the first image having the first resolution;
replace the first image having the first resolution with the second image having the second resolution after receiving the second image having the second resolution.

The processor is further configured to: replace the first image having the first resolution with the second image having the second resolution in a refreshing manner.

A non-transitory computer-readable storage medium is provided, in which when the instructions in the storage medium are executed by a processor of a device, the device may execute a method for transmitting an image, including:
receiving a first image having a first resolution from the mobile terminal;
sending a request to a server to obtain a second image to a server to an identification of the first image; and
receiving the second image having a second resolution from the server, wherein the second resolution is larger than the first resolution.

The method further includes: logging in the server with a predetermined account before sending the request to a server to obtain the second image according to an identification of the first image,
in which receiving the second image having a second resolution from the server includes: receiving the second image having the second resolution from an image base corresponding to the predetermined account from the server.

The method further includes:
the request comprises a resolution of a device allowing the server to select the second image from a plurality of images such as minimizing the difference between the resolution of the device and the resolution of the plurality of images, the plurality of images being stored by the server.. In other words, the difference between the second resolution and the resolution of the device is a minimum one of differences between each resolution of the plurality of image and the resolution of the device; or
the request comprises a type of the device and/or a model of the device allowing the server to determine the resolution of the device according to the type of the device and/or the model of the device and to select the second image from a plurality of images such as minimizing the difference between the resolution of the device and the resolution of the plurality of images, the plurality of images being stored by the server. In other words, the difference between the second resolution and the resolution of the device is the minimum one of differences between each resolution of the plurality of image and the resolution of the device.

When there are two images of the plurality minimizing the difference between the resolution of the device and the resolution of the plurality of images, the second image is further selected between the two images as the one having the larger resolution. In other words, when there are two minimum ones of the differences between each resolution of the plurality of images and the resolution of the device, the second resolution is larger than the resolution of the device.

The method further includes:
each image of said plurality in the server is uploaded by the mobile terminal.

The method further includes:
displaying the first image having the first resolution;
replacing the first image having the first resolution with the second image having the second resolution after receiving the second image having the second resolution.

Replacing the image of the first resolution with the image of the second resolution includes: replacing the image of the first resolution with the image of the second resolution in a refreshing manner.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

## Claims

1. A method for transmitting an image, comprising:
receiving a first image (S101) having a first resolution from a mobile terminal;
sending (S102) to a server a request to obtain a second image having a second resolution according to an identification of the first image; and
receiving said second image (S103) from said server, wherein the second resolution is larger than the first resolution.

2. The method according to claim 1, further comprising:
logging (202) in said server with a predetermined account before sending to said server said request to obtain said second image,
wherein receiving said second image from said server comprises receiving said second image from an image database corresponding to said predetermined account from said server.

3. The method according to claim 1, wherein
said server is storing a plurality of images having different resolutions but having same content;
the request comprises a resolution of a device, and said second image is selected from said plurality of images, such as minimizing the difference between the resolution of the device and the resolution of said plurality of images; or
the request comprises a type of the device and/or a model of the device, the server determines the resolution of the device according to the type of the device and/or the model of the device, and said second image is selected from said plurality of images, such as minimizing the difference between the resolution of the device and the resolution of said plurality of images.

4. The method according to claim 3, wherein when there are two images of said plurality minimizing the difference between the resolution of the device and the resolution of said plurality of images, said second image is further selected between said two images as the one having the larger resolution.

5. The method according to any of claims 1-4, wherein each image of said plurality in the server is uploaded by the mobile terminal.

6. The method according to any of claims 1-5, further comprising:
displaying said first image;
replacing said first image with said second image after receiving said second image.

7. The method according to claim 6, wherein replacing said first image with said second image comprises a step of replacing said first image with said second image in a refreshing manner.

8. A device for transmitting an image, comprising:
a first receiving module (401), configured to receive a first image having a first resolution from a mobile terminal;
a sending module (402), configured to send a request to a server to obtain a second image having a second resolution according to an identification of the first image; and
a second receiving module (403), configured to receive said second image from the server, wherein the second resolution is larger than the first resolution.

9. The device according to claim 8, further comprising: a log-in module (404), configured to log in said server with a predetermined account,
wherein the second receiving module (403) is configured to receive said second image from an image database corresponding to said predetermined account from said server.

10. The device according to any of claims 8-9, wherein
the request comprises a resolution of a device allowing said server to select said second image from a plurality of images such as minimizing the difference between the resolution of the device and the resolution of said plurality of images, said plurality of images being stored by said server; or
the request comprises a type of the device and/or a model of the device allowing said server to determine the resolution of the device according to the type of the device and/or the model of the device and to select said second image from a plurality of images such as minimizing the difference between the resolution of the device and the resolution of said plurality of images, said plurality of images being stored by said server.

11. The device according to any one of claims 8-10, further comprising:
a first displaying module (405), configured to display said first image;
a second displaying module (406), configured to replace said first image with said second image after receiving said second image.

12. The device according to claim 11, wherein the second displaying module (406) is configured to replace said first image with said second image in a refreshing manner.

13. A computer program including instructions for executing the steps of a method for transmitting an image according to any one of claims 1 to 7 when said program is executed by a computer.

14. A recording medium readable by a computer and having recorded thereon a computer program including instructions for executing the steps of a method for transmitting an image according to any one of claims 1 to 7.
